# EUROPEAN PATENT APPLICATION

(11) **EP 2 903 207 A1**
(43) Date of publication of application: **05.08.2015**
(21) Application number: 14196801.6
(22) Date of filing: 08.12.2014
(51) Int. Cl.: H04L 12/18

(54) **Systems and methods for topology aware data multicast**

(30) Priority: 30.01.2014 US 201414168841
(71) Applicant: Proximetry Poland Sp. z o.o., 40-203 Katowice (PL)
(72) Inventor: Grochla, Krzysztof, 44-120 Pyskowice (PL); Chrost, Lukasz, 44-100 Gliwice (PL); Seman, Aleksander, 44-200 Rybnik (PL); Bourlas, Yair, San Diego, CA California 92127 (US); Nowak, Slawomir, 44-100 Gliwice (PL); Nowak, Mateusz, 44-100 Gliwice (PL)

(57) **Abstract**

Systems and methods for using topology information about the nodes of a network to perform a multicast transmission of data. Neighbour information may be used to determine a logical network topology that overlays a mesh network having parent-child relationships. The network overlay to accomplish data multicast and acknowledgment of receipt of multicast data more efficiently than a conventional IP protocol multicast.

## Description

### Technical Field

Embodiments of the present invention relate to systems and methods for forwarding (e.g., broadcasting) data in a wireless network using knowledge (e.g., information) regarding the topology of the network.

### Background Art

In a wireless network, internet protocol ("IP") multicast is generally accomplished by each parent node forwarding information (e.g., data) to each of it children nodes. In a geographic area where the density of wireless nodes is high, IP multicast may be inefficient because the number of forwarding nodes is high and acknowledgement of receipt must be transmitted via many layers of parent-child nodes. A wireless network with high node density may benefit from using topological (e.g., logical, physical) information, such as neighbour information rather than parent-child information, to determine how to forward data to accomplish a multicast. A high-density wireless network may further benefit from accumulating acknowledgements received from lower levels prior to sending the acknowledgements to a higher level.

### Brief description of drawings

Embodiments of the present invention will now be further described with reference to the drawing, wherein like designations denote like elements, and:
FIG. 1 is a plan view of a system that includes servers, routers, devices, and networks, and that transmits multicast data according to various aspects of the present invention;
FIG. 2 is a plan view of a logical topology of a network of FIG. 1;
FIG. 3 is a diagram of an IP multicast;
FIG. 4 is a plan view of a physical topology of the network of FIG. 2;
FIGs. 5 - 9 is a plan view of the neighbours of nodes at the various levels of the network of FIGs. 2 and 4;
FIG. 10 is a plan view a logical topology of the network of FIG. 2 according to various aspects of the present invention;
FIG. 11 is a plan view of a different logical topology of the network of FIG. 2 according to various aspects of the present invention; and

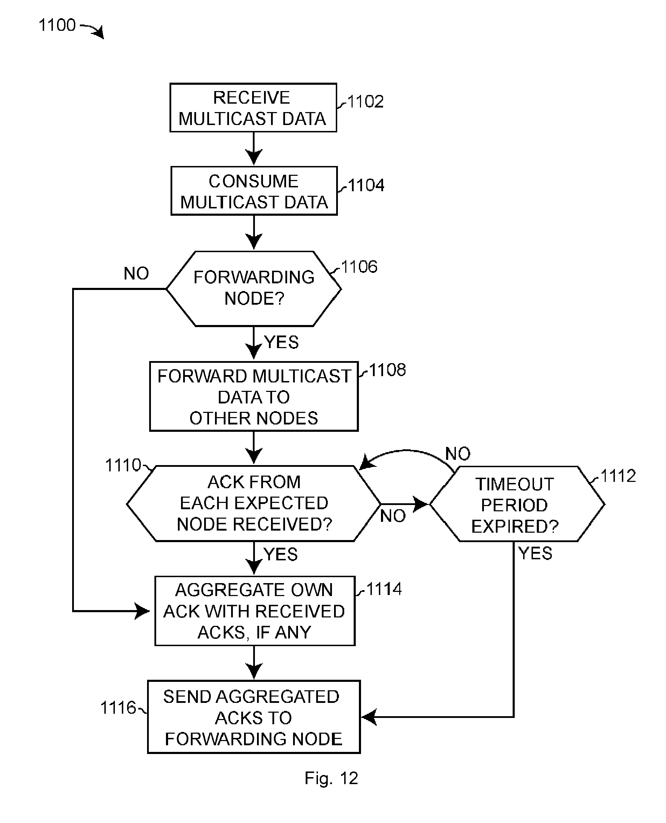

FIG. 12 is flow diagram of a method performed by a node of a network to perform multicast and acknowledgment according to various aspect of the invention.

### Description of embodiments

Electronic devices (e.g., transceivers, access points, mobile devices, utility meters, computers, servers, routers, gateways, cell phones, sensors) may communicate with each other (e.g., transmit data, send data, receive data) via communication links (e.g., channels). An electronic device may include any device capable of transmitting (e.g., sending, transferring), receiving, storing, generating, and/or manipulating data (e.g., information). An electronic device (e.g., device) may store information, retrieve information, and convert information for storage or retrieval.

Several electronic devices may form a network. Electronic devices may communicate wirelessly with each other. Devices may form a network referred to herein as a network, a mesh network, network group, network cluster, and/or simply cluster. Many devices may be formed into separate clusters. A cluster may be separate from and operate independent of other clusters. A server may communicate with one or more clusters.

At times, a server may have data that needs to be sent to most if not all nodes in one or more networks. Instead of sending the same data to each device in each network separately, the server may send the data to each network and request that the data be sent to each node. A transmission that is not directed to a particular node, but to many or all nodes, may be referred to as a multicast transmission. Depending on the topology of a network, a multicast transmission using a conventional protocol may be less efficient than using the multicast transmission according to the present invention.

A system that includes a server and one or more clusters includes a utility server that communicates with one or more networks of sensors, such as utility meters. For example, system 100 includes utility server 170, router 160, wide area network ("WAN") 162, and networks 120, 130, and 140. Utility server 170 includes topology server 172, and user interface 174. Each cluster includes a gateway and a plurality of utility meters (e.g., electrical, gas, water). A gateway includes any device that routes data between devices in the cluster and devices outside of the cluster such as other routers and/or networks. A gateway for a cluster may be referred to as a gateway, a network gateway, a cluster gateway, and/or a mesh gateway. Each cluster may include numerous (e.g., 500 - 100,000) meters. Each server, router, WAN, cluster gateway and/or meter may be referred to as a device. Each meter and/or cluster gateway may be referred as a node.

A meter measures (e.g., detects) use (e.g., consumption) of a commodity (e.g., water, gas, electricity, resource). A meter reports amounts of consumption measured. A meter includes any conventional meter. A meter may use any conventional communication link (e.g., wired, wireless) for reporting consumption. A meter may use any conventional communication protocol to communicate (e.g., transmit, receive) over a communication link. A meter may execute a stored program to perform a function. A stored program may be referred to as an application. A function may include transmitting, receiving, and/or acknowledging receipt of multicast data.

A group of meters may organized to form any type of network topology. For example, a group of meters may form a star network in which each meter communicates directly with a gateway. A group of meters may be formed into a mesh network in which some meters communicate directly with the gateway while other meters communicate via one or more meters to communicate with the gateway. A mesh network may include a network that includes parent-child relationships in which devices operate as parent nodes and/or children nodes. A node may be both a parent to some other nodes and a child of another node. A mesh network may include a network in which neighbour nodes communicate with each other. Meters that communicate via the same gateway, whether directly or indirectly, are in (e.g., a part of, a member of, within) the same cluster.

A cluster gateway routes data between meters and devices outside of the cluster such as routers and/or other networks. A server may be receive data from a cluster gateway. A cluster gateway may include the routing information for each meter that communicates via the cluster gateway and/or each meter within the cluster serviced by the cluster gateway. A cluster gateway may provide the routing information to a server so that a server may communicate with a device in the cluster. A cluster gateway may perform store and forward operations to transfer data to and from meters. The functions of a cluster gateway may be performed by a utility meter.

A cluster gateway may cooperate with a server to accomplish a multicast of data. For example, a cluster gateway may receive multicast data from a server, a cluster gateway may receive instructions to transmit data to each meter of the cluster via multicast, a cluster gateway may receive acknowledgement of receipt of multicast data from the nodes of the cluster directly and/or indirectly. A cluster gateway may transmit the data, receive acknowledgment, and retransmit if necessary without further support from the server. Once a multicast in performed, the cluster gateway may report its completion to the server. The cluster gateways of the various clusters may operate independently of each other to perform a multicast.

A cluster may be formed by meters physically located in a geographic area. A geographic area may include a building, a portion of a neighbourhood, an entire neighbourhood, or more than one neighbourhood. A human operator may define the boundary of a cluster. A range of wireless communication may be a factor in defining the geographic area of a cluster.

Utility meters may form clusters of varying densities and characteristics. For example, a cluster may include 500 - 100,000 nodes (e.g., meters). Density may be defined as the number of nodes that a node can detect. For example, each node in a high-density, average-density, and low-density clusters may detect 500, 100, and 50 other meters respectively. The transmission rate of the utility meters in a cluster may be between 2 kbits/second and 250 kb/s. The delay in transmitting from one hop (e.g., level) of the cluster to another hop, whether to a higher or lower level, may be between 0.2 second and 2 second. The packet error rate for each hop in a network formed by utility meters may be in the range of 0.001 to 50 percent. A further constraint on clusters formed of utility meter is that many of the meters (e.g., gas, water) are powered by a battery that limits their transmit power and frequency of operation (e.g., duty cycle).

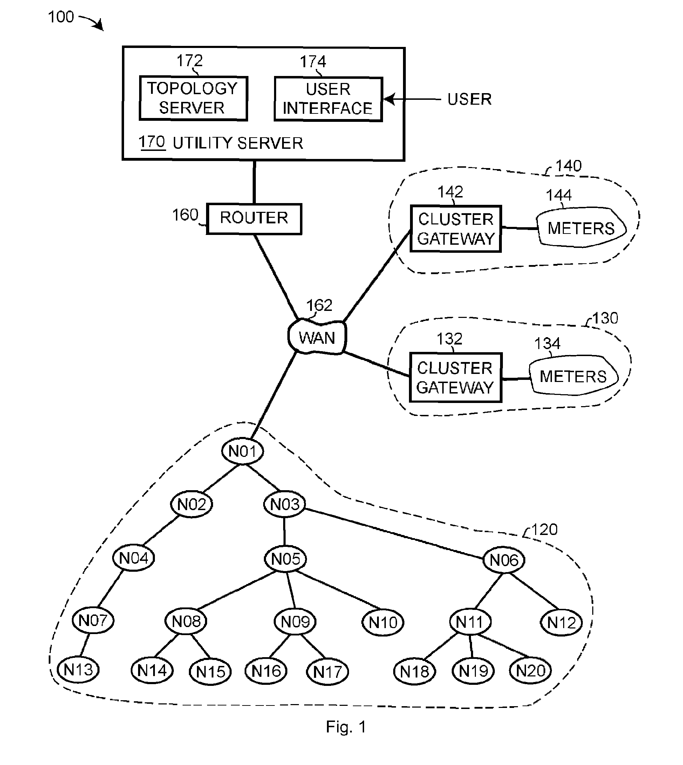

An example of the devices in a network cluster are the devices shown in cluster 120 of FIG. 1. Each node (e.g., NXX) represents a utility meter. Nodes N01 - N20 of a mesh network are configured to have parent-child relationships as discussed below. Node N01 may perform the functions of a cluster gateway. Clusters 130 and 140 include cluster gateways 132 and 142 and meters 134 and 144 respectively. Meters 134 and 144 include two or more meters that are organized into a mesh network. Generally, a meter is not a member of more than one cluster.

A utility server may control, monitor, provide data to, and receive data from meters and/or cluster gateways. Control of a meter may include disabling, enabling, configuring, resetting, and/or upgrading (e.g., firmware) a meter. Monitoring may include receiving notices, information (e.g., consumption), and/or alarms from a meter. Providing data to a meter may include providing a request for information from a meter, providing configuration information to the meter, and updating the firmware of a meter. Receiving data from a meter includes receiving information from each meter as to the identity of other meters with which the meter may communicate. Receiving data may further include receiving information as to the transmit strength of each meter within transmission range of a particular meter.

Configuring a meter may include specifying whether and/or how a meter will perform a function, specifying whether a function of a meter is enabled or disabled, measurement periodicity (e.g., per second, per week, per month), and specifying how (e.g., protocol) a meter communicates. Configuring a meter may include identifying (e.g., specifying) neighbours with which a node should communicate to accomplish a multicast as discussed below. Configuring a meter may include specifying how a meter may cooperate to accomplish a multicast of data through the cluster. Configuring a meter may include specifying how a meter should acknowledge receipt of multicast data.

A topology server detects, monitors (e.g., tracks), maintains, and operates on information regarding the topology (e.g., features, structure, position, relative position, relationships) of the system. Topological information may include information that relates a device to a physical location on earth, a relationship to a physical location, a relationship to an aspect of the system. For example, topological information may include a location of a meter, a relationship (e.g., parent, child, level) of a meter with respect to another meter and/or a cluster gateway, a relationship (e.g., in, out, within, without) of a meter to a cluster, information (e.g., maximum data rate, starting point, end point) regarding a communication link, a name of a utility that owns and/or operates each meter, and a subdivision name where each meter is located.

Topological information may further include information regarding the logical and/or physical arrangement of the nodes in the cluster, the network relationships between the nodes of the cluster, the neighbours of each node, the transmit signal strengths of each node as detected by all other nodes of the cluster.

A topology server may receive and record a physical location of each meter and/or cluster gateway, and the cluster to which the each meter and cluster gateway belongs. A topology server may operate on topological information to provide a description of the location of a device, identify the cluster to which a meter belongs (e.g., is part of), identify the neighbours of each node of a cluster, identify the parent-child relationships between the nodes of a cluster, determine the number of hops (e.g., levels) of communication in the cluster, and determine the number of levels between any two nodes of the cluster.

Information from the topology server may be used to accomplish a multicast of data and/or acknowledgment of receipt of multicast data according to various aspects of the present invention as discussed herein. In accordance with various aspects of the present invention, a topology server may determine a set of nodes that may forward data to accomplish a multicast.

A user interface may respond to manual operations of a user to perform a function of a utility server. A user interface includes any conventional user interface such as a keyboard, a mouse, a monitor, a touch screen, and a voice recognition device.

A router transfers information (e.g., data) from a source to a destination in a network. A router may perform its function in accordance with a communication protocol. A router cooperates with a network to transfer data. Router 160 includes any conventional router.

A wide area network ("WAN") is a network that covers an area. A WAN may include a network that performs operations across a city, across a metropolitan area, across a region, and/or nationally. A WAN may include communication links that are controlled and/or operated by private and/or public entities. WAN 162 includes any conventional wide area network.

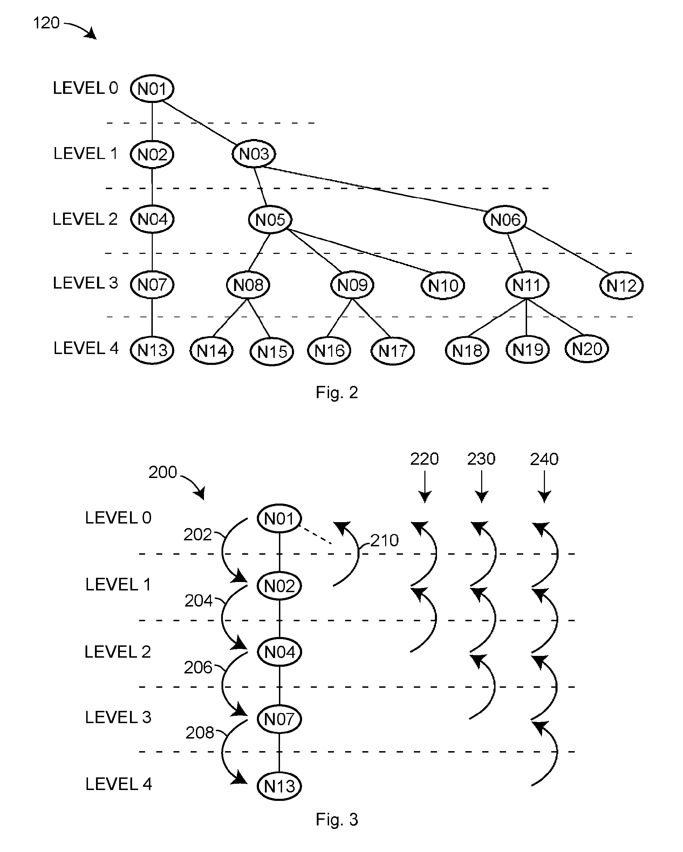

As discussed above, meters may form a mesh network. A parent-child hierarchy may be established within the mesh network by configuration, network protocol, or other mechanism. For example, referring to FIGs. 1 and 2, node N01 is a parent to nodes N02 and N03. Node N01 is not the child of another node. Node N02 is the parent of node N04. Node N03 is the parent of nodes N05 and N06. Nodes N10 and N12 - N20 are children nodes, but are not parent nodes.

The structure of a network having parent-child relationships may be further described by levels. Any node may be arbitrarily designated as level 0. The children of a level 0 node may be designated as level 1, the grandchildren of a level 0 node may be designated as level 2, and so forth. The transition (e.g., transmission, reception, transfer) from one level to another level may be referred to as a hop. One objective when forming a mesh network may be to minimize the number of hops (e.g., levels) in the network.

For example, referring to FIG. 1, node N01 is designated as a level 0 node. Accordingly, its children, N02 and N03, are level 1; its grandchildren, N04 - N06, are level 2, its great grandchildren, N07 - N09, N10, F11, and N12, are level 3; and its great-great grandchildren, N13 - N20, are level 4.

In a network having parent-child relationships, data transfer from a higher level to a lower level typically occurs by data transfer (e.g., forwarding) from a parent to children. Generally, during data transfer via multicast, all parents forward received information to their children. Because non-parent (e.g., child-only) nodes do not forward information, the number of forwarding nodes that cooperate to perform a multicast is equal to the number of parent nodes. The IP multicast protocol in a network formed of nodes having parent-child relationships uses all parents and no non-parents to forward data during multicast. In a wireless network where there are many nodes and they are close together (e.g., dense), requiring every parent to forward data to its children to accomplish multicast results in many transmission that overlap the same physical area of the network.

A constraints of a high-density or average-density network as discussed above increase the inefficiency of an IP multicast via the network. Multicast via such a network may benefit from using neighbour topology information to identify nodes that forward data to accomplish multicast.

According to various aspects of the present invention, the nodes that participate to forward data to accomplish multicast are not limited to parent nodes only. Further, not all parent nodes forward data to accomplish the multicast and some non-parent nodes forward data. Altering the requirement that all parents forward data during a multicast may reduce the number of forwarding nodes and thereby decrease the number of transmissions required to disseminate the data, reduce the interference in the wireless network, and reduce the power utilized by finite power supply (e.g., battery) devices used to participate in the multicast. Further, according to various aspects of the present invention, assigning forwarding nodes in accordance with neighbour topology information, rather than parent and child, may result in fewer overlapping transmissions to accomplish the multicast.

The method for multicast according to various aspects of the present invention is referred to herein as "neighbour multicast". The method for multicast using the IP protocol is referred to herein as the "IP multicast".

The IP multicast further requires each node (e.g., N02 - N20) that receives the multicast (e.g., information, packet) data to send acknowledgment of receipt via unicast to the originating node (e.g., N01). Each node that receives the multicast data transmits an acknowledgment packet with the originating node specified as the destination of the acknowledgement. Requiring each node to send an acknowledgment in a network that has a high per hop packet error rate increases the likelihood that an acknowledgement is not received even though the multicast data was received. Since acknowledgments must be sent over several hops, the possibility that an acknowledgment is lost may be high. Not receiving an acknowledgment when the data was received means that data will be unnecessarily retransmitted and an acknowledgement resent.

To illustrate IP multicast in a parent-child network, a portion of the network of FIGs. 1 and 2 is shown in FIG. 3. Forward transmission 200 of IP multicast data is occurs when the originating parent N01 transmits data 202 that is received by parent N02, parent N02 transmits data 204 that is received by parent N04, parent N04 transmits data 206 that is received by parent N07, and parent N07 transmits data 208 that is received by child N13. Because node N13 is not a parent, it does not transmit data as part of the IP multicast.

Each node that receives data in the IP multicast acknowledges receipt via unicast to node N01. Node N02 transmits acknowledgment 210 for receipt to node N01. Acknowledgment 220 from node N04 is transmitted by node N04 to node N02 and from node N02 to node N01. Acknowledgment 230 is transmitted by node N07 through nodes N04 and N02 to node N01 and acknowledgement 240 is transmitted by node N13 through nodes N07, N04, and N02 to node N01. The transmission of an acknowledgment packet is not successful unless the packet goes from the originating node (e.g., node N13) and successfully arrives at the node that originated the multicast transmission (e.g., node N01). Any transmission that is lost in the chain (e.g., multiple hops, 240) of transmission results in a lost acknowledgment that requires retransmission of the multicast data to that particular node.

In a network having the packet error rate for each hop as discussed above, the longer the chain of transmission (e.g., more hops), the greater the probability of loss of the acknowledgment packet. For example, if the packet error rate between two nodes is 5%, the probability that acknowledgment packet 210 will successfully arrive at node N01 is 95%. The odds of successful arrival are lower in the case of acknowledgment packet 240.

Acknowledgement packet 240 from node N13 to node N01 is transmitted over four hops. The transmission from any one node to the next node has a 95% chance of arriving. However, the probability of the packet traveling from node N13 and arriving at node N01 after all four transmissions (e.g., hops) is only 81.45% (i.e., 0.95^4), so the probability of successfully receiving the acknowledgment packet from node N 13 is about 13.5% less likely than receiving the acknowledgement packet from node N02. Any lost acknowledgment requires retransmission of the data to the node whose acknowledgment was lost. Retransmission may occur via unicast.

The process of transmitting acknowledgment via unicast for the other nodes (e.g., N03, N05 - N06, N08 - N12, N14 - N20) of the network of FIG. 1 is analogous to the process discussed above.

-- Exploiting knowledge about the topology of a network may provide a manner for performing a multicast and receiving acknowledgements, according to various aspects of the present invention that provides efficiencies that are not possible with the parent-child constraints of an IP multicast. Network topology information may include information about parent-child relationships between the nodes of the network, information about neighbours to each node, distance between nodes, transmit signal strength of a node as perceived by another node, transmit power required by a node to transmit to a particular other node, geographic coordinate of a node, logical topology, and information regarding time and date of the duty cycle (e.g., on-off cycles) of a node. The neighbours of a node include those other nodes with which the node may communicate.

A topology server may receive information regarding the devices of a cluster from the devices of the cluster and/or from a user via user interface 174. A topology server may query a node of a cluster to receive information from the node regarding neighbour information. A topology server may process (e.g., sort, organize, analyse, compare, prioritize) information received form devices of one or more clusters. A topology server may establish relationships between devices of a cluster in accordance with information from any source. A topology server may establish relationships between devices of a cluster in accordance with a criteria.

For example, topology server 172 may query each node, N01 - N20, of cluster 120 to receive information from each node such as detected signal strength from other nodes, node identifiers with which the node may communicate, throughput between the node and other nodes, duty-cycle of the node, battery status (e.g., amount of charge remaining), energy (e.g., power) required to transmit to other nodes, energy required to receive, per packet (e.g,. acknowledgment) energy to transmit and/or receive, computational capacity (e.g., processing power, processing ability, memory), and/or storage (e.g., buffering) capacity of the node.

Topology server 172 may use the information received from electronic devices and/or information received from a user to determine which devices are suitable to perform the function of forwarding multicast data according to various aspects of the present invention. Suitable criteria of a device for forwarding multicast information may include communication with many other nodes, higher signal strength between the node and the other node, high available energy, geographic location, power, processing capability (e.g., capacity), and/or buffering capacity to perform the functions of forwarding and acknowledgment aggregation according to various aspects of the present invention, and duty cycle.

Topology server 172 may identify nodes that are suitable for performing the function of a forwarding node. Topology server 172 may determine a logical topology for a cluster to use to accomplish neighbour multicast and aggregated acknowledgement. Topology server 172 may send logical topology information to each device in a cluster. Topological server 172 may send a function designator to a device so that the device knows whether it performs the function of a forwarding node or a non-forwarding node. Topological server may send information to each node so that each node may identify the forwarding node from which the node should receive multicast cast data during a neighbour multicast, identify the nodes that should receive multicast transmissions from forwarded from the node, and identify other nodes from which the node should expect to receive acknowledgements.

A topology server may be common to many clusters and perform the functions of a topology server, discussed above, for one or more clusters. In an implementation, topology server 172 performs the functions of a topology server for clusters 120, 130, and 140. In another implementation, a device in a network performs the functions of a topology server for the respective cluster. For example, cluster gateways N01, 132, and 142 perform the functions of a topology server for clusters 120, 130, and 140 respectively. In another implementation, the nodes of a network cooperate to perform the functions of a topology server for their network. The nodes (e.g., N01 - N20) of the network (e.g., network 120) communicate with each other to provide the information discussed above, to determine neighbours, and to establish a topology. The nodes cooperate to determine which nodes should perform the functions of a forwarding node or a non-forwarding node. A topology determined by the nodes of a network may be provided (e.g., reported, transmitted to) the topology server.

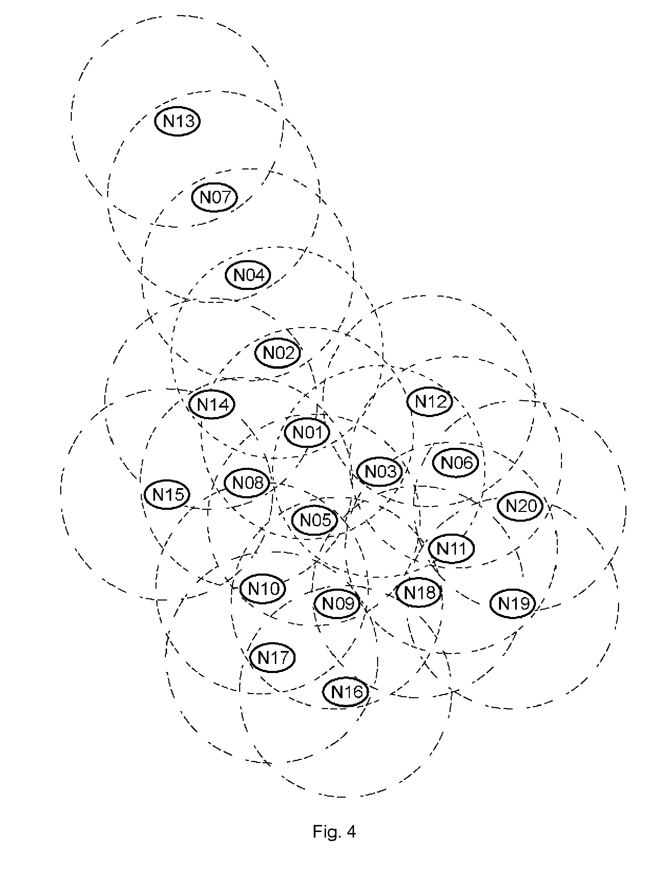

A possible physical topology of cluster 120 is shown in FIG. 4. The physical topology of a network includes the physical placement of nodes relative to each other. The physical topology may further include the area in which a device may transmit and receive signals (e.g., communicate). The circle around each wireless node (e.g., N01 - N20) represents the physical area in which the node can communicate (e.g., transmit, receive) wirelessly. The area of communication for each node is shown as two dimensional, even though the area is three-dimensional, to simplify the figures. The area of transmission is shown as being the same as the area for reception even though that may not be the case in reality. The drawings are further simplified by showing the area of communication as a circle with the node in the center even though the shape of the area of communication of a node, possibly due to interference, may be any arbitrary shape. It is assumed that nodes that fall within the same area of communication (e.g., circle) may communicate with each other. The circle represent a communication area may further represent the area in which the node may transmit a signal at or above a minimum power level and receive signals above a minimum power level.

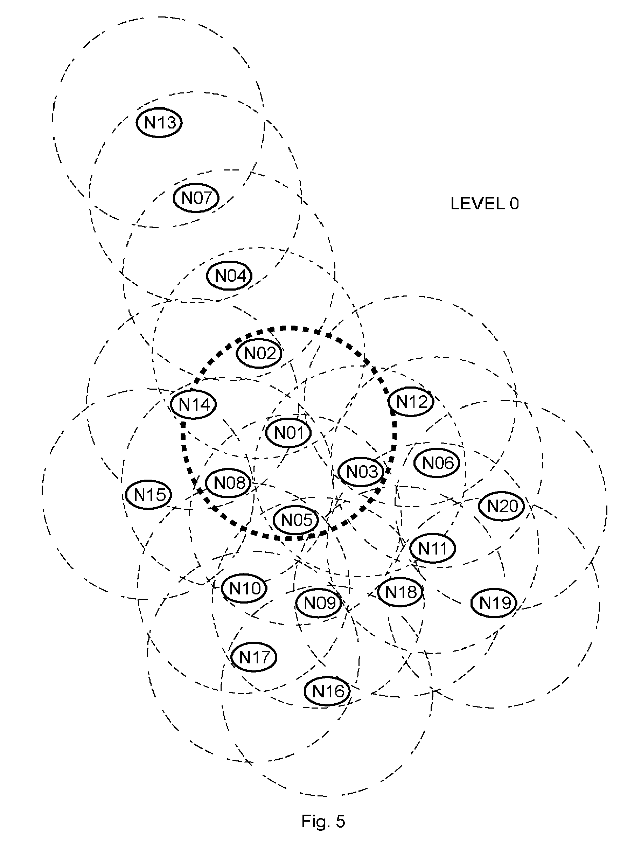

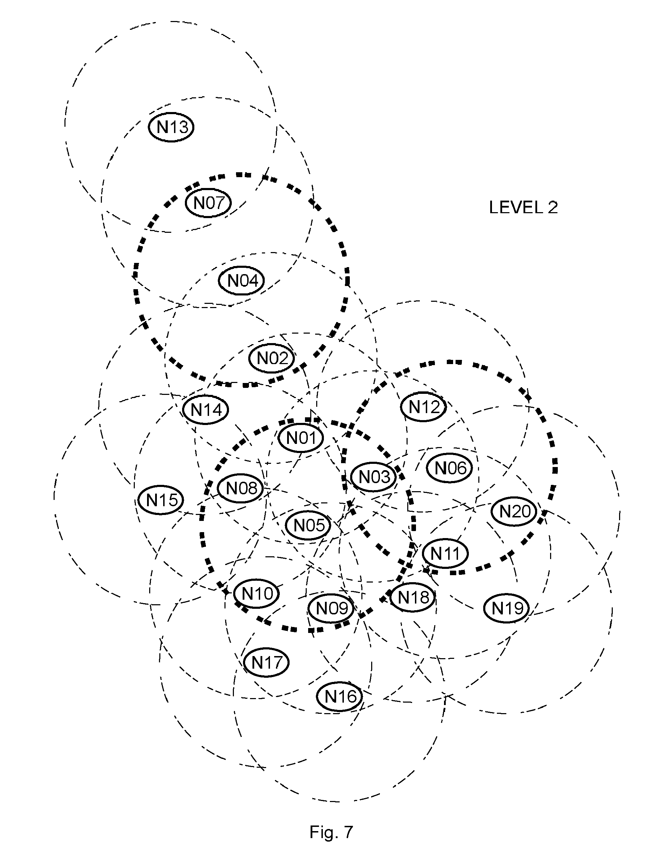

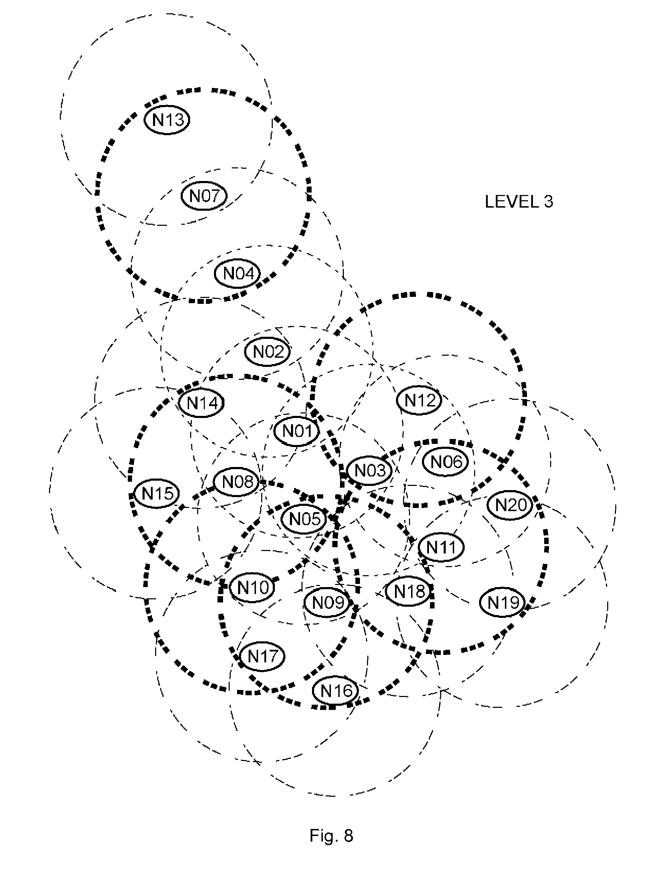

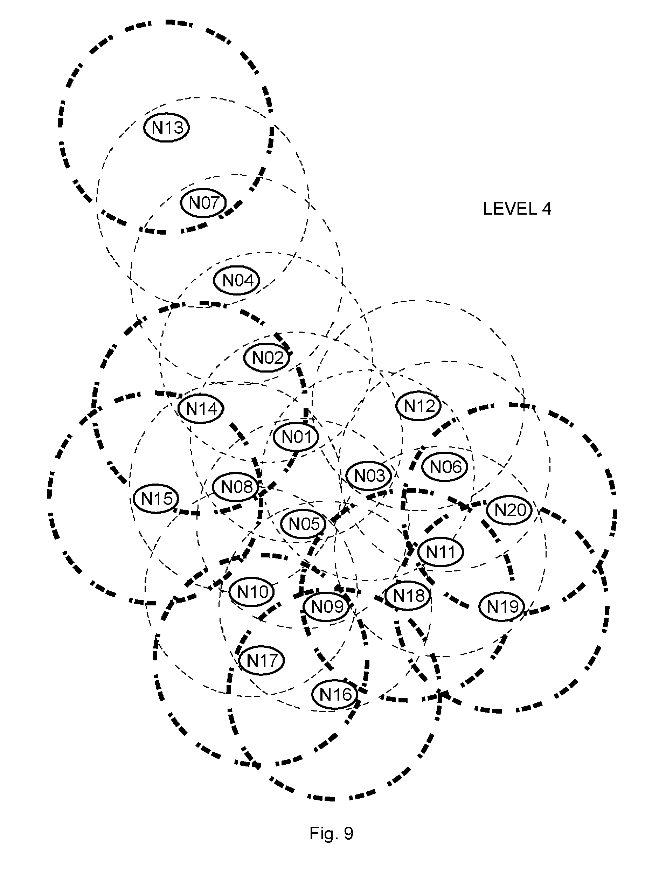

The physical networks shown in FIGs. 5 - 9 highlight the nodes of each level of FIG. 2 with their respective areas of communication. The information in FIGs. 5 - 9 may be used to understand how a parent node communicates with its children and vice versa and/or to identify the neighbours of each node. According to various aspects of the present invention, topology server 172 may use neighbour information to select nodes that may forward multicast data regardless of whether the node is identified as a parent or a child in the logical network of FIGs. 1 and 2.

For example, referring to FIG. 5, node N01 determined to be neighbours with and may wirelessly communicate with nodes N02, N03, N05, N08, and N14. A node may detect signals from many other nodes. Information as to the detected nodes, along with any other information discussed above, may be sent to topology server 172. Topology server 172 may apply a criteria to determine whether a detected node should operate as a neighbour node according to various aspects of the present invention. Criteria may include signal strength, receive data error rate, receive data rate, throughput, and/or any of the other factors (e.g., energy, duty cycle, buffering capacity) discussed above. Topology server 172 may receive information from the nodes of a cluster and apply the criteria to determine which nodes are suitable neighbours for each node.

For example referring to FIG. 5, node N01 may be able to detect signals from and/or communicate with nodes N02 - N03, N05 - N06, N08, N12, N14, and N15. However, topology server 172 may determine in accordance with a criteria that nodes N06, N12, and N15 are not suitable as neighbours of node N01. Accordingly, topology server 172 identifies nodes N02 - N03, N05, N08, and N14 as the neighbours of node N01.

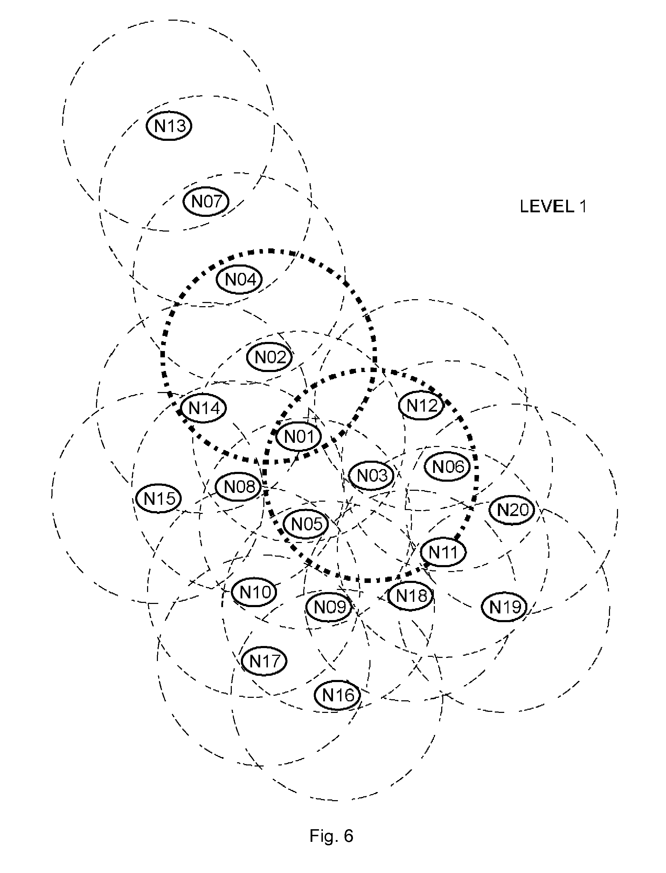

The information of FIG. 6 shows the neighbours of nodes N02 and N03 as determined by topology server 172. Even though node N02 or node N03 may be able to detect and/or communicate with additional nodes, topology server 172 identifies nodes N01, N14, and N04 as the neighbours of node N02 and nodes N01, N05- N06, N11, and N12 as the neighbours of node N03. The nodes of the network shown in FIGs. 2 and 4 - 9 have the neighbours identified in Table 1.

Note that the lower portion of the network of FIG. 4, not nodes N13, N07, and N04, are more closely spaced to two or more other nodes. Close spacing, as in a network of utility meters, may result in many neighbours for each node. Distant spacing or possibly physical objects that interfere with radio communication may result in few neighbours. For example, node N13 has one neighbour, nodes N07 and N04 have only two neighbours.

**Table 1**

| **Node** | **Neighbour Nodes** |
|---|---|
| N01 | N02, N03, N05, N08, N14 |
| N02 | N01, N04, N14 |
| N03 | N01, N05, N06, N11, N12 |
| N04 | N02, N07 |
| N05 | N01, N03, N08, N09, N10 |
| N06 | N03, N11, N12, N20 |
| N07 | N04, N13 |
| N08 | N01, N05, N14, N15 |
| N09 | N05, N10, N16, N17, N18 |
| N10 | N05, N08, N09, N17 |
| N11 | N03, N06, N18, N19, N20 |
| N12 | N03, N06 |
| N13 | N07 |
| N14 | N01, N02, N08, N15 |
| N15 | N08, N14 |
| N16 | N09, N17 |
| N17 | N09, N10, N16 |
| N18 | N09, N11, N19 |
| N19 | N11, N18, N20 |
| N20 | N06, N11, N19 |

As discussed above, in the IP multicast protocol, every parent node must forward multicast data to its children that participate (e.g., subscribe to) the multicast. The information of Table 1 shows that some nodes may communicate with, and therefore forward data, to nodes that are not its child. Further, nodes designated as children may communicate with nodes that are not its parent. The parent-child relationships established in a network may not minimize or reduce the number of nodes that forward data during a multicast. A criteria while forming relationships between nodes according to the present invention is to minimize or reduce the number of nodes that forward data to accomplish a multicast. The logical topology of the network according to the present invention may be different from the logical topology of the mesh network with parent-child relationships.

neighbour information may be used to identify nodes that may forward multicast data (e.g., forwarding node) to other nodes. A forwarding node may include any node regardless of whether it is identified as a parent or a child in the mesh network. neighbour information may be used to identify a minimum or a reduced set of nodes, as compared to the number of parent nodes in the mesh network that may be used to forward data to accomplish a multicast of the data.

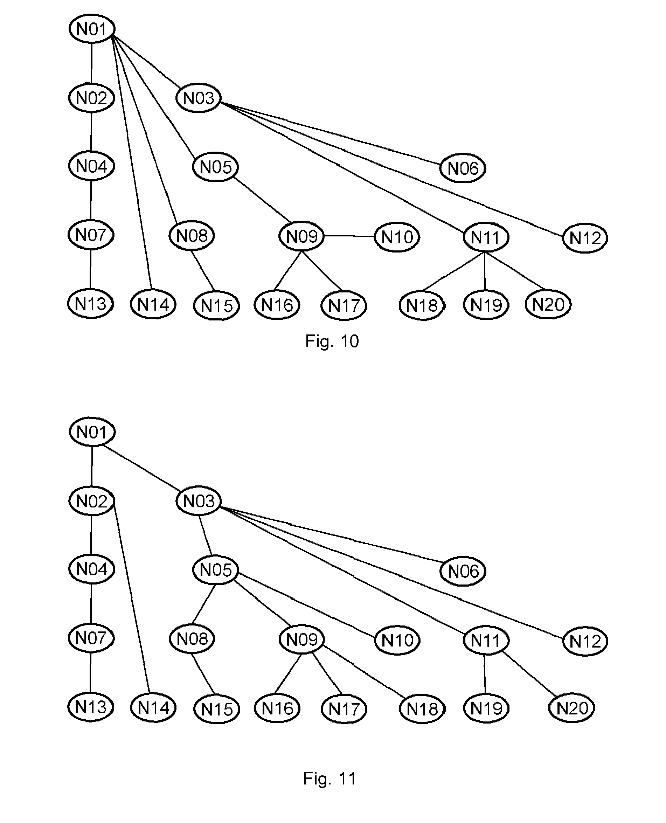

For example, the logical network of FIG. 10 uses nodes N01 - N05, N07-N09, and N11 as forwarding nodes to accomplish neighbour multicast. The forwarding nodes both receive and forward the multicast data. The other nodes, N06, N10, and N12 - N20, do not forward data during a neighbour multicast, but receive multicast data. The network of FIG. 10 includes nine nodes that operate as forwarding nodes. The network of FIG. 2 includes ten parent nodes, so the network of FIG. 10 has one less forwarding node than the network of FIG. 2. The logical network of FIG. 11 is slightly different from the network of FIG. 10, but also includes nine forwarding nodes (i.e., N01 - N05, N07 - N09, N11) and eleven non-forwarding nodes (i.e., N06, N10, N12 - N20).

Although the networks of FIGs. 10 - 11 have only one forwarding node less than the number of parent nodes in FIG. 2, simulations of large networks (e.g., > 6,000 - 10,000 nodes) of average density (e.g., 100 neighbours per node) or high density (e.g., 500 neighbours per node) show that the number of forwarding nodes to accomplish neighbour multicast may be significantly less (e.g., 2 - 10 times) than the number of parent nodes in the parent-child mesh network for the same nodes. Reducing the number of nodes that forward data during a multicast provides the benefits discussed above.

Identifying a minimum or reduced set of forwarding nodes for neighbour multicast may be accomplished using an algorithm that is performed iteratively. Topology server 172 may use neighbour information, such as that show in Table 1, to determine different logical topologies that use selected nodes as forwarding nodes. Any criteria may be used to select the logical topology to perform the neighbour multicast. Criteria may include a minimum number of forwarding nodes and a reduce set of forwarding nodes in which each forwarding node meets criteria such as available power, processing capability, buffering capacity, speed of transmission and/or reception, and/or duty cycle.

Information as to which nodes operate as forwarding nodes and which nodes operate as non-forwarding nodes may be transmitted by the topology server to each node of each cluster. The information as to the mode of operation of each node during neighbour multicast may be part of an application executed by each node to accomplish neighbour multicast.

The logical network for neighbour multicast according to various aspects of the present invention may be an overlay on the logical network of the parent-child mesh network. The neighbour multicast overlay need be active only during neighbour multicast while the logical topology of the network is the parent-child topology of the mesh network for all other operations. For example, the parent-child mesh network of FIG. 2 may be used to provide all IP services except for IP multicast. When a neighbour multicast is performed, the IP multicast capability of each node is disabled and the neighbour multicast executed as a program at the application level. Executing the neighbour multicast redefines the logical topology of the network to be the topology determined by topology server 172 for neighbour multicast. Using the neighbour multicast topology, the nodes of the network forward and receive data along the links between forwarding and non-forwarding nodes as defined by the neighbour multicast topology. Once the neighbour multicast is complete, including acknowledgement, the logical topology of the network reverts to the parent-child topology of the mesh network.

A forwarding node (e.g., N01 - N05, N07 - N09, N11), while preforming a neighbour multicast, receives multicast data, stores the data, and retransmits the data. A non-forwarding node (e.g., N06, N10, N12 - N20) receives multicast data, but does not retransmit the data. For example, node N01 of FIG. 10 or 11 receives multicast data likely from utility server 170. N01, as all forwarding and non-forwarding nodes, receives the packet of multicast data. Because node N01 is a forwarding node, node N01 retransmits the packet of multicast data. As discussed above, the neighbours of node N01 include N02, N03, N05, N08, and N14. When node N01 retransmits, the neighbours of node N01 may receive the packet of multicast data.

Although all forwarding nodes receive and retransmit the multicast data, not all nodes of the network are required to participate in the multicast. Even though a node receives the multicast data or even retransmits the multicast data, a non-participating node does not need to use the data. Non-participating nodes do not consume (e.g., use) the multicast data.

Each neighbour of node N01 that receives the multicast data handles the data in accordance with whether the node is a forwarding or a non-forwarding node. All nodes receive the multicast data for consumption and forwarding nodes retransmit the multicast data. This process continues until all nodes have received the multicast packet.

In an implementation, neighbour multicast may require a node to receive multicast data only from its assigned forwarding node. Multicast packets received from a node other than the assigned forwarding node may be ignored. For example, node N03 must receive multicast data from node N01 and not from other neighbour nodes such as N05.

In another implementation of the neighbour multicast algorithm, any node may receive multicast data from its logical forwarding node and/or from any other node that is a neighbour. For example, referring to FIGs. 4 - 5, 7, 10 - 11 and Table 1, node N05 is neighbours with and may communicate with nodes N01, N03, and N08 - N10. Of these neighbours, nodes N01, N03, and N08 - N09 are forwarding nodes, so node N05 may receive multicast packets when transmitted by node N01, but node N05 may also opportunistically receive transmissions from nodes N03 and N08 - N09. In this implementation of the neighbour multicast algorithm, node N05 may receive and retain for use a copy of any multicast packet that is received from multiple sources. Opportunistic receipt of multicast data from a non-forwarding node may increase reliability of a network that has a high transmit error rate.

In a neighbour multicast logical network with a minimum of forwarding nodes, a particular node may receive multicast transmissions from only one forwarding node. For example, the physical position of nodes N01 - N02, N04, N07, and N13 with respect to each other and the other nodes of the network limits the nodes that may forward multicast data. Node N14 is a neighbour to N02 could forward multicast data to node N02, as opposed to node N01. However, node N04 is in transmission range of forwarding node N02 only, node N07 is in transmission range of forwarding node N04 only, and node N13 is in range of forwarding node N07 only. Nodes N04, N07, and N13 must receive multicast data from a particular node and no others.

After having received a multicast packet, a node, depending on the communication protocol, generally transmits an acknowledgment packet that informs the originating node that the packet was received. According to various aspects of the present invention, acknowledgment of receipt of a multicast packet may be performed in a manner to improve efficiency and to reduce loss of acknowledgment transmissions.

When discussing neighbour multicast and acknowledgment, it is convenient to refer to the logical hierarchy of the network as having levels. The transition from one level to the next may be referred to as a hop. For example, referring to FIG. 10, node N01 is at the top of the hierarchy in the neighbour multicast logical topology. This level is referred to herein as level 10 to distinguish it from the level 0 of FIG. 2. The next level down in the neighbour multicast hierarchy, referred to herein as level 11, includes nodes N02 - N03, N05, N08, and N14 because they are the nodes that receive multicast data from N01. The next level down from nodes N02-N03, N05, and N08, referred to herein as level 12, includes nodes N04, N06, N09, N11, N12, and N15. The next level down from nodes N04, N09, and N11, referred to herein as level 13, includes nodes N07, N10, and N16 - N20. The lowest level, referred to herein as level 14 includes node N13.

As discussed above, IP multicast utilizes unicast acknowledgement from each node regardless of the level of the node to the highest level node (e.g., N01). The process of transmitting and receiving acknowledgment packets may be performed according to various aspects of the present invention so that a node expects acknowledgment packets only from a neighbour that is one hop away from the node receiving the acknowledgment. For example, node N01 may expect acknowledgment packets from nodes N02, N03, N05, N08, and N14, but not from nodes that are more than one hop away. In the event that an acknowledgment packet transmitted to node N01 is lost, a node that is only one hop away, as opposed to a node that is many hops away, retransmits the acknowledgment thereby increasing network efficiency.

Acknowledgment may also be aggregated to reduce the number of transmissions made, reduce power usage, reduce interference, and to improve reliability of transmitting and receiving acknowledgements. A node may aggregate acknowledgments by waiting to send its own acknowledgement packet until it has received acknowledgment from nodes from which it expects to receive an acknowledgment packet. The node may send its own acknowledgment aggregated with the acknowledgments of neighbour nodes in a single packet to its forwarding node. An aggregated acknowledgment packet includes information that identifies all of the nodes that have received the multicast data along that logical line of the neighbour multicast network.

In an implementation, a forwarding node expects to receive an acknowledgment packet from the nodes to which it forwards multicast data. For example, referring to FIG. 10, node N11 expects to receive acknowledgment packets from nodes N18 - N20. Node N 11, and not any other higher-level node (e.g., N03, N01) expects acknowledgment packets from nodes N18 - N20. In the event that the acknowledgement packet from node N20 is lost, node N20 may retransmit to node N11 and not to a node that is more than one hop away.

Forwarding nodes at each level of the hierarchy may expect to receive acknowledgment packets from the nodes to which they forward multicast data. For example, referring to FIG. 10, node N11 expects to receive acknowledgment from nodes N18 - N20; node N09 expects to receive acknowledgment from nodes N10 and N16 - N17; node N08 from node N 15; node N05 from node N09; node N03 from nodes N06 and N11 - N 12; node N07 from node N 13; node N04 from node N07; node N02 from node N04; and node N01 from nodes N02 - N03, N05, N08, and N14.

A forwarding node may wait for expiration of a timeout period to receive acknowledgment from the nodes from which it expects acknowledgment. If acknowledgment does not arrive from all expected nodes upon expiration of the timeout period, the forwarding node may prepare and send an aggregated acknowledgment indicating that it received the multicast data, but that the other nodes did not. For example, node N11 may wait for a timeout period before sending its aggregated acknowledgement packet to provide time for nodes N18 - N20 to transmit, and even possibly retransmit, their acknowledgements for aggregation. If node N11 receives acknowledgment from only some or none of nodes N18 - N20, then upon the expiration of the timeout period, N11 transmits an aggregated acknowledgement packet indicating its own receipt and receipt for those nodes for which it has receive acknowledgment. For example, if by the expiration of the timeout node N 11 receives acknowledgment from N18 only, the aggregated acknowledgment packet indicates that the acknowledgment packet was received by N18 and N 11.

As soon as a node receives acknowledgement from all the nodes from which it expects acknowledgment, the node may prepare and send an aggregated acknowledgment packet to its forwarding node. A node does not need to wait for expiration of the timeout period to send an aggregated acknowledgment if it has received acknowledgment from all of its expected nodes. For example, as soon as node N11 receives acknowledgement from nodes N 18 - N20, node N11 may prepare and send an aggregated acknowledgment packet to node N03.

Non-forwarding nodes do not need wait to receive acknowledgment from any other node because they are not expecting to receive acknowledgment from any other nodes. For example, nodes N18 - N20 may transmit acknowledgement packets upon receipt of the multicast packet and as permitted by transmission media availability.

Non-forwarding nodes need not be precluded from receiving and aggregating acknowledgments, but they do not need to be required to wait to receive acknowledgment prior to forming and transmitting their own acknowledgment packet. For example, node N20 is a non-forwarding node; however, node N20 is in transmission range of node N06. Node N06 is at a higher level in the hierarchy and may transmit its acknowledgment before node N20 transmits its own acknowledgment. It is possible that N20 will receive the acknowledgment packet transmitted by node N06. When node N20 transmits its own acknowledgment, it may include an indication that node N06 has acknowledged receipt of the multicast packet. Node N20 may aggregate the acknowledgement from N06 with its own acknowledgment.

Permitting some if not all non-forwarding nodes to aggregate acknowledgments means that nodes at higher levels in the hierarchy may receive notice of acknowledgment for any particular node from several different sources.

Further, forwarding nodes may be permitted to aggregate acknowledgments from nodes from which the forwarding node does not expect to receive an acknowledgment. For example, node N09 expects to receive acknowledgment from nodes N10 and N16 - N17; however, node N09 is in transmission range of nodes N05 and N18. Because node N05 is at a higher level than node N09 and expects to receive acknowledgment from node N09, node N05 will not transmit its acknowledgment before the timeout period expires for node N09, so node N09 cannot aggregate the acknowledgment from node N05. However, node N09 may receive and aggregate the acknowledgment transmitted by node N18 even though it is not expecting to receive an acknowledgment from node N18. The acknowledgment transmitted by node N18 must be received by node N09 before it transmits its own acknowledgment, so node N09 would need to receive the acknowledgment from node N18 before node N09 received acknowledgment from all of its expected nodes (e.g., N10, N 16 - N17) and before the timeout period for node N09 expired.

Permitting non-forwarding nodes to aggregate acknowledgments and forwarding nodes to aggregate acknowledgments from unexpected nodes may provide redundant paths for providing acknowledgment and may reduce the number of lost acknowledgments in a network that has a high packet error rate.

The amount of time a node waits to receive an expected acknowledgment from other nodes may depend on the level of the node in the hierarchy. The duration of the timeout period may be proportional to the node's level in the hierarchy. A node that is higher in the hierarchy (e.g., level 10: node N01, level 11: nodes N02, N03, N08, N 14) may have a timeout period that is greater than the timeout period of a node at a lower level in the hierarchy (e.g., level 12: node N09, level 13: nodes N07).

For example, the duration of the timeout period for node N11 on level 12 includes the time needed to receive acknowledgment from the nodes N18 - N20 on level 13. The duration of the timeout period for node N03 on level 11 includes the time for nodes N 11, N12, and N06 on level 12 and the time for nodes N18 - N20 on level 13. The duration of the timeout period for N01 on level 10, if it sends an acknowledgment, includes the time for all nodes on levels 11 - 14 to respond.

The amount of time a node waits to receive an expected acknowledgment from other nodes may further depend on the number of nodes from which acknowledgments are expected. The timeout period may be proportional to the number of nodes from which acknowledgments are expected. The timeout period may be proportional to the number of nodes and any delays for each node to access the media to transmit acknowledgement.

For example, the timeout period for a node (e.g., N08) that expects an acknowledgment from only one node (e.g., N15) may be shorter than the timeout period for a node (e.g., N 11) that expects acknowledgment from more than one node (e.g., N18 - N20). The timeout period for node N08 may the time for N15 to respond to receipt of the multicast data and any time required for node N15 to have access to the media to transmit the acknowledgment. With respect to node N 11, nodes N18 - N20 receive and respond to receipt of a multicast packet at approximately the same time, but nodes N18 - N20 cannot all transmit acknowledgment packets at the same time or they will interfere with each other. The duration of the timeout period that node N11 waits for acknowledgement is proportional to the time it takes for each node N18 - N20 to access the media and transmit its acknowledgment packet.

Each node of a network may perform method 1100 to accomplish neighbour multicast according to various aspects of the present invention and/or to provide acknowledgment of receipt of multicast data according to various aspects of the present invention. As discussed above, method 1100 may be performed by the node executing an application.

Method 1100 includes the following processes: receive 1102, consume 1104, node type 1106, forward 1108, verify receipt 1110, timeout check 1112, aggregate 1114, and send 1116.

A process may be executed upon receipt of the data needed to perform the process. Two or more processes may be executed in parallel. Processes may be executed serially. A process may use data or the result of a calculation to make a branching decision as to which of two or more subsequent processes may be executed. A process may provide data to one or more other processes. The performance of a process may result from the execution of a stored program by a processing circuit.

Process receive 1102 includes receiving multicast data. Data may be received using any conventional communication protocol. Receiving data may be accomplished via wireless transmission. Receiving data may include receiving a packet of data. Received data may be transmitted (e.g., sent) by a forwarding node of a network while performing neighbour multicast. Process receive 1102 may determine whether the received data was transmitted by the node's forwarding node or by another node.

Process consume 1104 includes using received multicast data by the node. Multicast data may include data for any conventional process and/or purpose. Using multicast data may include storing the data, executing code provided in the packet of data, performing processing operations on the data, and providing the data to a user. Multicast data may include a firmware upgrade for the node, so that consuming the data includes revising the operating firmware of the node that receives the data.

Process node type 1106 includes determining a function performed by a node. The function of a node may include performing the functions of a forwarding node of a neighbour multicast network as discussed herein. The functions of a node may include performing the functions of a non-forwarding node of a neighbour multicast network. Topology server 172 may provide each node with information as to the function to be performed by the node during neighbour multicast.

Process forward 1108 includes transmitting multicast data. Multicast data may include data received while performing process receive 1102. Data may be transmitted using any conventional communication protocol. Transmission may include wireless transmission. Process forward 1108 may include transmitting data stored for later transmission. Process forward 1108 includes transmitting data for receipt at least by specific other nodes. Process forward 1108 includes transmitting data for receipt by neighbour nodes.

Process verify receipt 1110 may include determining whether a transmission indicating receipt of earlier transmitted data has been received from one or more nodes. A transmission indicating receipt of data may include a packet that contains information regarding the node that received the earlier transmitted data and/or the data (e.g., packet no., identity) received. A transmission indicating receipt of data may include a conventional acknowledgement packet. Process verify receipt 1110 may compare the information from the received acknowledgments to a list of expected acknowledgements. Process verify receipt 1110 may identify nodes from which an acknowledgment is expected. Identifying a node may include maintaining a list of nodes from which an acknowledgment is expected. Topology serer 172 may provide information as to which nodes are expected to provide acknowledgment. Acknowledgements may be expected from nodes that receive data from a forwarding node as discussed above. Process verify receipt 1110 may determine whether acknowledgment has been received from all expected nodes or only a portion of the expected nodes.

Process timeout check 1112 may include determining whether a duration of time has expired. Determining whether a duration of time has expired may include detecting whether a timer (e.g., clock) has reached a particular state or a particular time. Detecting expiration may include detecting a lapse of time. The duration of a timeout period may proportional to the level of the node in the network as discussed above. The duration of a timeout period may be proportional to the number of nodes expected to provide acknowledgment as discussed above. The duration of a timeout period may be proportional to the number of nodes and the amount of time required for each node to access the media to transmit an acknowledgment packet. A topology server may determine and provide an appropriate value for a timeout period in accordance with the level of the node in the network, the number of nodes that provide acknowledgment to the node, and the delays of the communication protocol used.

Process aggregate 1114 includes preparing an aggregated acknowledgment packet, as discussed above. An aggregated acknowledgment includes an indication that the node preparing the packet has received the multicast data. An aggregated acknowledgment includes an indication that zero or more expected nodes have received the multicast data. An aggregated acknowledgment packet may include an indication that zero or more nodes, other than the expected nodes, have received the multicast data. Information as to whether expected nodes and/or nodes other than expected nodes have received the multicast data may be determined by receiving an acknowledgement packet from the zero or more expected nodes and/or nodes other than expected nodes. Process aggregate 1114 may include preparing a single acknowledgment packet that includes information regarding the receipt of multicast data by the node forming the acknowledgement packet, by any expected nodes, and/or any nodes other than expected nodes.

Process send 1116 includes transmitting an acknowledgment packet or an aggregated acknowledgment packet. Process send 1116 transmits the acknowledgement or aggregated acknowledgment packet. The node that forwards data the node transmitting the acknowledgement packet may receive the acknowledgment or aggregated acknowledgment packet. The packet transmitted may also be received by any other neighbour node.

The foregoing description discusses preferred embodiments of the present invention, which may be changed or modified without departing from the scope of the present invention as defined in the claims. Examples listed in parentheses may be used in the alternative or in any practical combination. As used in the specification and claims, the words 'comprising', 'including', and 'having' introduce an open ended statement of component structures and/or functions. In the specification and claims, the words 'a' and 'an' are used as indefinite articles meaning 'one or more'. While for the sake of clarity of description, several specific embodiments of the invention have been described, the scope of the invention is intended to be measured by the claims as set forth below.

## Claims

1. A method performed by a node of a mesh network for wirelessly transmitting data to accomplish a multicast of the data in the network, the mesh network comprising a plurality of nodes, each node having at least one of a parent and a child relationship with one or more other nodes of the network, the method comprising:
receiving a first information, the first information comprising an identity of zero or more nodes that are expected to respectively transmit an acknowledgment for receipt by the node, the first information determined in accordance with a second information, the second information comprising the identity of one or more other nodes that communicate with the node;
receiving a function indicator, a value of the function indicator comprising one of forwarding and non-forwarding, the value of the function indicator determined in accordance with the second information and not in accordance with the parent and child relationships of the plurality of nodes;
receiving a value of a timeout period, the value of the timeout period determined in accordance with the second information;
receiving the data for the multicast;
responsive to receiving the data for multicast and the value of the function indicator being forwarding: transmitting the data for the multicast;
responsive to the node not having received the respective acknowledgment from all nodes that are expected to transmit acknowledgment: waiting for expiration of the value of the timeout;
aggregating any received acknowledgments with the acknowledgment of the node; and
transmitting the aggregated acknowledgment.

2. The method of claim 1 further comprising transmitting the second information for at least one of a server and another node of the mesh network to determine the first information.

3. The method of claim 1 wherein the first information is determined by at least one of a server and another node of the mesh network.

4. The method of claim 1 wherein the function indicator is determined by at least one of a server and another node of the mesh network in accordance with the second information.

5. The method of claim 1 wherein the value of the timeout period is determined by at least one of a server and another node of the mesh network in accordance with the second information.

6. The method of claim 1 wherein the first information, the function indicator and the value of the timeout period are determined by at least one of a server and another node of the mesh network.

7. The method of claim 1 wherein the second information further comprises a signal strength detected by the node when communicating with the one or more other nodes.

8. A method performed by a device for determining a neighbour topology to overlay a mesh network organized in accordance with parent-child relationships, the neighbour topology for accomplishing a multicast of data, the method comprising:
determining the identity of one or more nodes of the mesh network for performing the function of a forwarding node, the remaining nodes of the mesh network for performing the function of a non-forwarding node;
determining a relationship between the forwarding nodes and the non-forwarding nodes of the mesh network to establish the neighbour topology for transmission of multicast data and reception of acknowledgments responsive to multicast transmission; and
responsive to establishing the neighbour topology, providing to each node of the mesh network a function indicator, an identity of zero or more expectant nodes, and a value of a timeout respectively; wherein:
the number of forwarding nodes is less than the number of the parent nodes;
the functional indicator selected from the set of forwarding node and non-forwarding node;
the zero or more expectant nodes comprise those nodes from which each node respectively expects to receive an acknowledgment; and
the value of the timeout is the amount of time each nodes respectively waits to receive an acknowledgment from the zero or more expectant nodes.

9. The method of claim 8 wherein determining the identity of one or more nodes for performing the function of a forwarding node comprises:
receiving a first information from each node of the mesh network, the first information comprising an identity of one or more nodes that communicate with each node of the network; and
in accordance with the first information and a criteria, determining the identity of one or more neighbours for each node of the network; and
in accordance with the identity of the one or more neighbours, determining the identity of the one or more forwarding nodes.

10. The method of claim 9 wherein the criteria comprises an amount of energy required to transmit a packet and a battery status for each node of the network.

11. The method of claim 8 wherein the value of the timeout for non-forwarding nodes is zero.

12. The method of claim 8 wherein the device comprises at least one of a server and a node of the network.

13. The method of claim 8 wherein:
the neighbour topology comprises an uppermost node; and
a non-zero value of the timeout is proportional to the number of hops between the node and the uppermost node.

14. The method of claim 13 wherein the uppermost node transmits the multicast data before all other forwarding nodes in the network.

15. The method of claim 13 wherein the timeout is further proportional to a number of the expectant nodes.
